# EUROPEAN PATENT APPLICATION

(11) **EP 4 443 898 A1**
(43) Date of publication of application: **09.10.2024**
(21) Application number: 22909443.8
(22) Date of filing: 09.10.2022
(51) Int. Cl.: H04Q 11/00

(54) **INFORMATION PROCESSING METHOD, NETWORK SYSTEM, AND COMPUTER-READABLE STORAGE MEDIUM**

(30) Priority: 20.12.2021 CN 202111562360
(71) Applicant: ZTE Corporation, Shenzhen, Guangdong 518057 (CN)
(72) Inventor: ZHANG, Hongxi, Shenzhen, Guangdong 518057 (CN); LI, Mingsheng, Shenzhen, Guangdong 518057 (CN)
(74) Representative: Savi, Massimiliano
(86) International application number: PCT/CN2022/124170
(87) International publication number: WO 2023/116125

(57) **Abstract**

Provided in the present application are an information processing method, a network system, and a computer-readable storage medium. The information processing method is applied to the network system, and the networks stem comprises a first network device and a second network device. The method comprises: a fist network device receiving an uplink notification message, wherein the uplink notification message comprises first state information, the first state information is used for representing that there is an abnormal situation in a first downlink channel, and the fist downlink channel is used for transmitting a downlink data message (S100); and the first network device transmitting, according to the first state information, the downlink data message to the second network device by means of a second downlink channel, wherein the second downlink channel is determined by the first network device according to a second downlink signal, and the second downlink signal is obtained by performing pilot tone processing on a first downlink signal matching the first downlink channel (S200).

## Description

### CROSS-REFERENCE TO RELATED APPLICATION

This application is based on and claims the priority of Chinese patent application No. 202111562360.7 filed on December 20, 2021, the disclosure of which is incorporated herein by reference in its entirety.

### TECHNICAL FIELD

Embodiments of the present disclosure relate to but are not limited to the field of information processing technologies, for example, relate to an information processing method, a network system, and a computer-readable storage medium.

### BACKGROUND

Currently, with continuous development of network services, in order to reduce the possible adverse impacts on network operation, a network management and maintenance channel is getting increasingly important. For example, in a data access network, a passive optical network (PON) is increasingly used in a wider range, and has become a mainstream application of optical fiber access. In PON, embedded management channels are usually used for network management and maintenance. For example, GPON technology based on ITU-TG.98X standards adopts Optical Network Unit (ONU) management and control interface channels or physical layer operation administration and maintenance channels; while EPON technology based on IEEE standards adopts operations, administration and maintenance channels. Through these management channels, an optical line terminal (OLT) can maintain and manage an ONU.

However, in use of the network, due to excessive attenuation of an optical distribution network (ODN), a receive optical power of the OLT or ONU may be lower than the sensitivity of an optical module, resulting in packet loss. In this case, it is difficult to quickly obtain, or even unable to obtain, OAM information through the management channel, which makes it difficult to effectively reflect an anomaly on the ONU or OLT, and therefore it is impossible to perform effective network management.

### SUMMARY

The following is a summary of the subject matters described in detail herein. This summary is not intended to limit the scope of protection of the claims.

Embodiments of the present disclosure provide an information processing method, a network system, and a computer-readable storage medium, so that network management can be performed when it is learned that there is an anomaly on a network channel.

In accordance with a first aspect of the present disclosure, an embodiment provides an information processing method, applied to a network system, the network system including a first network device and a second network device, the method including: receiving, by the first network device, an uplink announcement packet sent by the second network device, where the uplink announcement packet includes first state information for indicating a presence of an anomaly on a first downlink channel, and the first downlink channel is used to transmit a downlink data packet sent by the first network device to the second network device; transmitting, by the first network device, the downlink data packet to the second network device through a second downlink channel according to the first state information in the uplink announcement packet, where the second downlink channel is determined by the first network device according to a second downlink signal, where the second downlink signal is obtained by performing pilot tone modulation on a first downlink signal matching the first downlink channel.

In accordance with a second aspect of the present disclosure, an embodiment further provides an information processing method, applied to a network system, the network system including a first network device and a second network device, the method including: receiving, by the second network device, a downlink announcement packet sent by the first network device, where the downlink announcement packet includes second state information for indicating a presence of an anomaly on a first uplink channel, and the first uplink channel is used to transmit an uplink data packet sent by the second network device to the first network device; and transmitting, by the second network device, the uplink data packet to the first network device through a second uplink channel based on the second state information in the downlink announcement packet, where the second uplink channel is determined by the second network device according to a second uplink signal, where the second uplink signal is obtained by performing pilot tone modulation on a first uplink signal matching the first uplink channel.

In accordance with a third aspect of the present disclosure, an embodiment further provides a network system, including: a memory, a processor, and a computer program stored in the memory and executable by the processor, where the computer program, when executed by the processor, causes the processor to implement the information processing method of the first aspect and the second aspect.

In accordance with a fourth aspect of the present disclosure, an embodiment further provides a computer-readable storage medium storing computer-executable instructions for performing the information processing method of the first aspect and the second aspect described above.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 is a schematic diagram of a network system for performing an information processing method according to an embodiment of the present disclosure;
FIG. 2 is a flowchart of an information processing method according to an embodiment of the present disclosure;
FIG. 3 is a flowchart existing before a first network device receiving an uplink announcement packet in an information processing method according to an embodiment of the present disclosure;
FIG. 4 is a flowchart of obtaining a second downlink signal in an information processing method according to an embodiment of the present disclosure;
FIG. 5 is a flowchart of a first network device transmitting a downlink data packet in an information processing method according to an embodiment of the present disclosure;
FIG. 6 is a schematic diagram illustrating a principle of modulation and demodulation of a PON signal according to an embodiment of the present disclosure;
FIG. 7 is a schematic diagram illustrating a principle of data transmission between an OLT and an ONU according to an embodiment of the present disclosure;
FIG. 8 is a flowchart existing before a first network device framing a downlink data packet in an information processing method according to an embodiment of the present disclosure;
FIG. 9 is a schematic diagram of a structure of a downlink frame according to an embodiment of the present disclosure;
FIG. 10 is a flowchart of an information processing method according to another embodiment of the present disclosure;
FIG. 11 is a flowchart existing before a second network device receiving a downlink announcement packet in an information processing method according to another embodiment of the present disclosure;
FIG. 12 is a flowchart of obtaining a second uplink signal in an information processing method according to an embodiment of the present disclosure;
FIG. 13 is a flowchart of a second network device transmitting an uplink data packet in an information processing method according to an embodiment of the present disclosure;
FIG. 14 is a schematic diagram of a structure of an uplink frame according to an embodiment of the present disclosure;
FIG. 15 is a schematic diagram of an internal structure of an OLT according to an embodiment of the present disclosure;
FIG. 16 is a schematic diagram of an internal structure of an ONU according to an embodiment of the present disclosure;
FIG. 17 is a schematic diagram of a structure of a downlink frame according to another embodiment of the present disclosure; and
FIG. 18 is a schematic diagram illustrating a principle of an emergency restart of an ONU by an OLT according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that although a functional module division may be shown in a schematic diagram of a device and a logical order may be shown in a flowchart, the steps shown or described can be executed, in some cases, with a different module division from that of the device or in a different order from that in the flowchart. The terms such as "first" and "second" in the description, claims and above-mentioned drawings are intended to distinguish between similar objects and are not necessarily to describe a specific order or sequence.

The present disclosure provides an information processing method, a network system, and a computer-readable storage medium. When a first network device receives an uplink announcement packet sent by a second network device, the first network device can accurately learn, through first state information in the uplink announcement packet, that there is an anomaly on a current network link. A second downlink channel is determined by the first network device according to a second downlink signal, and the second downlink signal is obtained by performing pilot tone modulation on a first downlink signal matching the first downlink channel. Therefore, based on the first state information, a downlink data packet can be switched from the first downlink channel to the second downlink channel matching the second downlink signal for transmission. Compared with an existing technology, the present disclosure can realize network channel transmission management in a case that there is an anomaly on a network channel, thereby improving stability of data packet interaction.

The embodiments of the present disclosure will be further explained below with reference to the accompanying drawings.

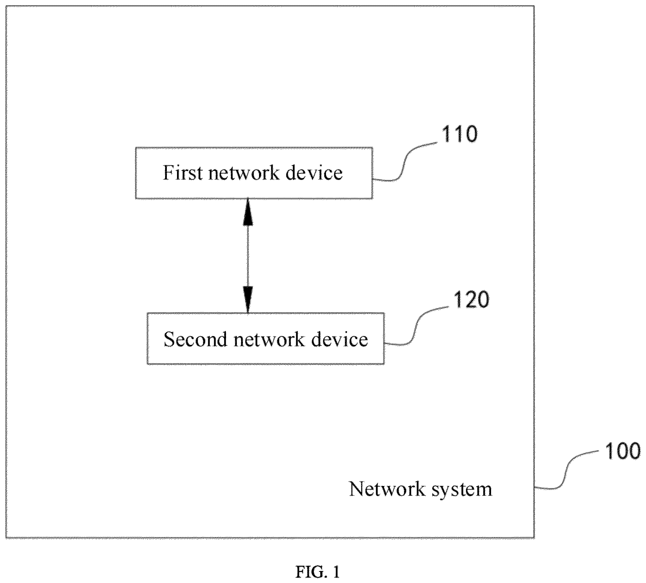

Now refer to FIG. 1. FIG. 1 is a schematic diagram of a network system 100 for performing an information processing method according to an embodiment of the present disclosure.

In the example shown in FIG. 1, a network system 100 includes but is not limited to a first network device 110 and a second network device 120. The first network device 110 and the second network device 120 can establish an interactive relationship. Quantities of the first network device 110 and the second network device 120 are not limited. It should be noted that the network system 100 of this embodiment can be applied to different scenarios, such as a PON access scenario, an Ethernet interconnection scenario, a wireless access scenario, etc. In different scenarios, the first network device 110 and the second network device 120 can specifically set their respective components, parameters, and composition modes. This is not limited in this embodiment. Since operating principles of the network system 100 in all application scenarios are basically the same, to avoid redundancy, the following embodiments are mainly described for the PON access scenario, but it should not be understood as a limitation to the application scenarios of the network system 100.

When the network system 100 is applied to the PON access scenario, the first network device 110 may be but is not limited to an OLT, and the second network device 120 may be but is not limited to an ONU. The OLT may be used to maintain and manage the ONU to ensure a good condition of the PON network. Here, the OLT and the ONU jointly form a PON access network. A plurality of ONUs may be set, and each ONU corresponds to one OLT. The ONU and the OLT perform data packet transmission over a network link in a PON, and the transmission is realized according to a wavelength main signal transmitted in the PON. A transmission mode may be but is not limited to an uplink frame or a downlink frame. In other words, by filling a data packet to be sent into a corresponding uplink frame or downlink frame, when the ONU or OLT receives the uplink frame or downlink frame, the ONU or OLT can obtain the relevant data packet by analyzing the uplink frame or downlink frame.

In an embodiment, packets for interaction between the OLT and the ONU may be of various types, for example, data packets are sent for transmitting normal traffic data. Alternatively, when it is necessary to determine whether a state of an uplink channel or a downlink channel between the OLT and the ONU is normal, a handshake packet may be sent to the other side to determine the state. Alternatively, when the ONU has an irreversible failure, related packets or the like need to be sent to prompt the ONU to restart, where different packets can be sent individually or in combination at any moment, for example, packets of various types are filled in a data frame and sent together, which is not limited in this embodiment.

The first network device 110 and the second network device 120 in the network system 100 may each include a memory and a processor, where the memory and the processor may be connected by a bus or by other means.

As a non-transitory computer-readable storage medium, the memory can be configured to store a non-transitory software program and a non-transitory computer-executable program. In addition, the memory may include a high-speed random access memory and a non-transitory memory, for example, at least one magnetic disk storage device, a flash memory device, or another non-transitory solid-state storage device. In some implementations, the memory may optionally include memories remotely located with respect to the processor, and these remote memories may be connected to the processor via a network. Examples of the above-mentioned network include, but are not limited to, the Internet, an intranet, a local area network, a mobile communication network, and a combination thereof.

The network system 100 and an application scenario described in the embodiment of the present disclosure are for more clearly describing the technical schemes of the embodiments of the present disclosure, and do not constitute a limitation on the technical schemes provided by the embodiments of the present disclosure. Those of ordinary skill in the art can understand that, with evolution of the network system 100 and emergence of new application scenarios, the technical schemes provided by the embodiments of the present disclosure are also applicable to similar technical problems.

Those of ordinary skill in the art may understand that the network system 100 shown in FIG. 1 does not constitute a limitation on the embodiments of the present disclosure, and there may be more or fewer components than illustrated, or some of the components may be combined, or a different arrangement of the components may be used.

In the network system 100 shown in FIG. 1, the first network device 110 and the second network device 120 may respectively invoke their stored information processing programs to cooperate in execution of the information processing method.

Based on the structure of the network system 100 described above, various embodiments of the information processing method of the present disclosure are proposed. In order to more clearly explain the working principle and flow of the present disclosure, the following embodiments are mainly described based on packet interaction of uplink and downlink sides.

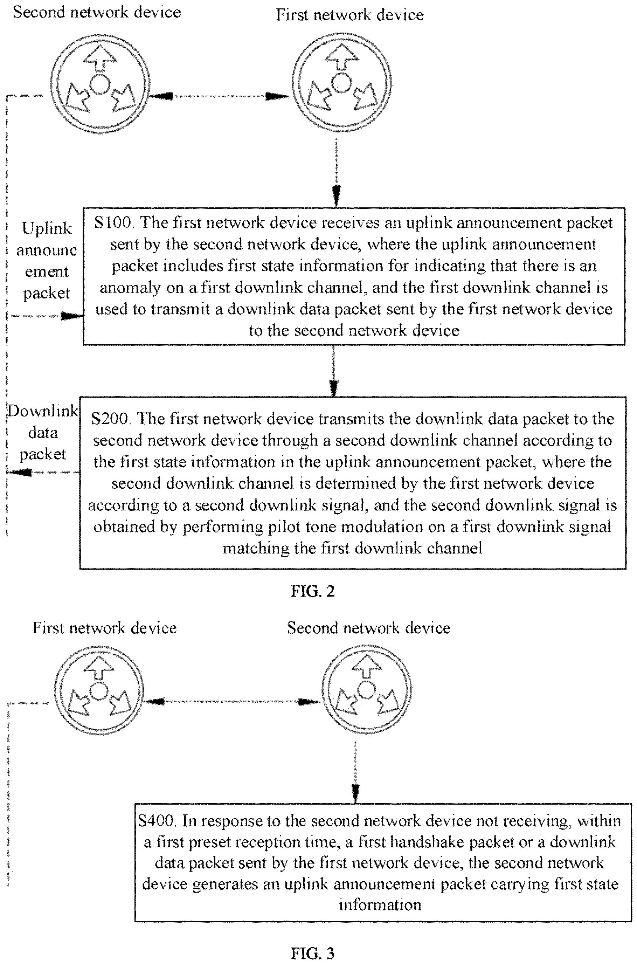

Now refer to FIG. 2. FIG. 2 is a flowchart of an information processing method according to an embodiment of the present disclosure. The method may be applied to, without being limited to, a network system as shown in the embodiment of FIG. 1, and the information processing method includes but is not limited to steps S100 to S300.

At S 100, a first network device receives an uplink announcement packet sent by a second network device, where the uplink announcement packet includes first state information for indicating that there is an anomaly on a first downlink channel, and the first downlink channel is used to transmit a downlink data packet sent by the first network device to the second network device.

In an embodiment, for data packet interaction on a downlink side, when the first network device receives the uplink announcement packet sent by the second network device, the first network device can accurately learn, through the first state information in the uplink announcement packet, that there is an anomaly on a current network link. Compared with an existing technology, there is no need to obtain relevant OAM information through a management channel to determine a condition of the network link, which reflects more intuitively a state of the network link. It should be noted that as a general concept, the downlink data packet may be one or more specific data packets, which can be set adaptively in different application scenarios, and is not limited in this embodiment.

In an embodiment, there are various manners to determine that there is an anomaly on the first downlink channel, for example, a detected receive optical power of the ONU is lower than sensitivity of an optical module, or it is detected that a large number of bit errors have occurred in the ONU, or it is detected that data received by the ONU suffers packet loss. Those having ordinary skill in the art may also determine whether there is an anomaly in a reception state of the first downlink channel according to an actual application scenario, which is not limited in this embodiment.

In the example shown in FIG. 3, before S100, the method further includes but is not limited to S400, where step S400 is a specific step embodiment when it is indicated that there is an anomaly on the first downlink channel.

At S400, in response to the second network device not receiving, within a first preset reception time, a first handshake packet or the downlink data packet sent by the first network device, the second network device generates the uplink announcement packet carrying the first state information.

In an embodiment, a function of the first handshake packet is to determine a state of the network link. When the ONU does not receive the first handshake packet or the downlink data packet sent by the OLT, it can be determined that the reception state of the first downlink channel from the OLT to the ONU is abnormal. Therefore, in order to announce the first state information to the OLT, the ONU generates the uplink announcement packet carrying the first state information to further announce the first state information to the OLT, so that the OLT can learn a real-time link state of the first downlink channel in time, to handle a failure corresponding to the first downlink channel.

It should be noted that the ONU can generate and send the uplink announcement packet to the OLT at any time, and the scenario in S400 in which the ONU does not receive the first handshake packet sent by the OLT also satisfies the above-mentioned case, except that in the scenario in S400, when the ONU generates and sends the uplink announcement packet, the ONU carries the first state information in the uplink announcement packet to inform the OLT that there is an anomaly on the current link.

In an embodiment, by setting the first preset reception time, interaction moments of the OLT and the ONU can be limited to a preset range, so that it can be more accurately determined whether the ONU can receive the first handshake packet. It can be understood that, the first preset reception time may be set accordingly by those having ordinary skill in the art according to an actual application scenario, which is not limited in this embodiment.

At S200, the first network device transmits the downlink data packet to the second network device through a second downlink channel according to the first state information in the uplink announcement packet, where the second downlink channel is determined by the first network device according to a second downlink signal, and the second downlink signal is obtained by performing pilot tone modulation on a first downlink signal matching the first downlink channel.

In an embodiment, the second downlink signal may be preset and stored in the network system. For example, pilot tone modulation may be performed on the first downlink signal during an idle period to obtain the second downlink signal. When the situation shown in S200 occurs, the first network device may directly obtain the second downlink signal from the network system, then determine the second downlink channel matching the second downlink signal, and transmit the downlink data packet to the second network device through the second downlink channel. It can be learned that the second downlink signal in this manner is easy to obtain, which is conducive to realizing a channel switch as soon as possible when a link is faulty.

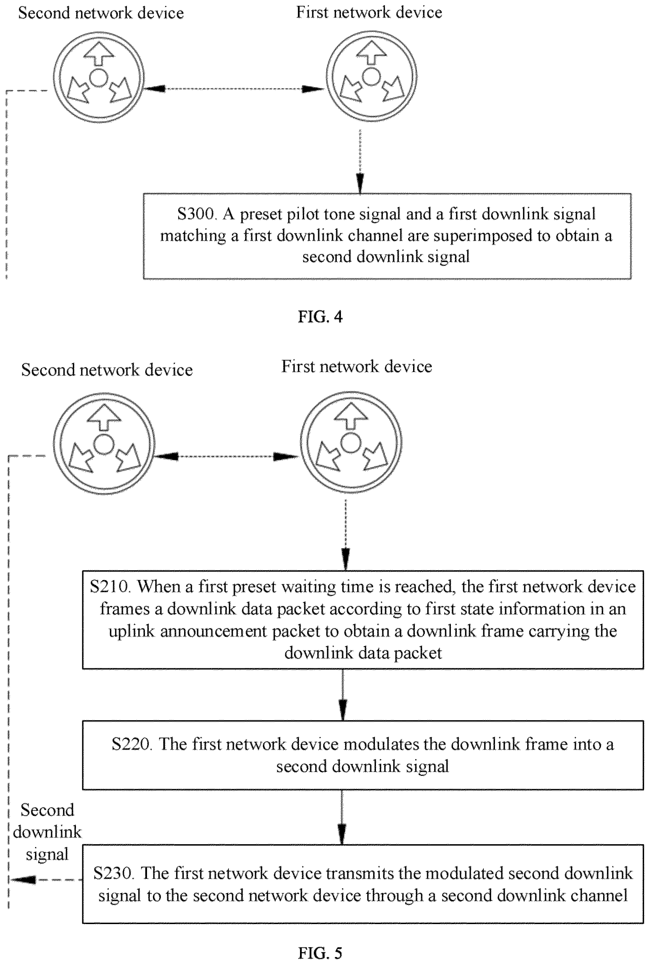

In an embodiment, in the example shown in FIG. 4, the second downlink signal is obtained by processing the first downlink signal as shown in step S300: .

At S300, a preset pilot tone signal and the first downlink signal matching the first downlink channel are superimposed to obtain the second downlink signal.

In an embodiment, a low-frequency dither signal (that is, a preset pilot tone signal) can be superimposed on a wavelength main signal transmitted in a PON, so that a corresponding data packet can be encapsulated into a channel matching the superimposed signal for transmission. It can be proved from experimental research that sensitivity performance of a standby main signal (that is, the second downlink signal) obtained after superimposing the preset pilot tone signal on the wavelength main signal (that is, the first downlink signal) of a service in downlink of the PON is better than that of the original wavelength main signal of the service, with an improvement of usually more than 10 dB. Based on this performance optimization method, the second downlink channel provided based on the second downlink signal can be used to transmit data packets when a received signal in the PON network exceeds a sensitivity range or packet loss or interruption occurs.

In an embodiment, when the first network device receives the uplink announcement packet sent by the second network device, the first network device can accurately learn, through the first state information in the uplink announcement packet, that there is an anomaly on a current network link. The second downlink channel is determined by the first network device according to the second downlink signal, and the second downlink signal is obtained by performing pilot tone modulation on the first downlink signal matching the first downlink channel. Therefore, based on the first state information, the downlink data packet can be switched from the first downlink channel to the second downlink channel matching the second downlink signal for transmission. Compared with an existing technology, the present disclosure can realize network channel transmission management in a case that there is an anomaly on a network channel, thereby improving stability of data packet interaction.

In an embodiment, when the ONU is used as the second network device, the downlink channel may be blocked due to a software hang or OMCI and PLOAM channel anomaly on the ONU, or an ONU software is hanging or a main channel cannot be used for communication due to a software or hardware failure on the ONU. In this case, stable fault recovery cannot be implemented by active intervention of the OLT, but requires more complex technical means. In order to improve this situation, packet transmission adjustment for the ONU can be realized by using steps S100 to S300, and technical effects similar to those that can be achieved by the above embodiment can be obtained, which will not be repeated herein.

It should be noted that the second downlink channel, as a standby channel matching the preset pilot tone signal, can be used after a switch only in a scenario in which it is determined that there is an anomaly on the first downlink channel. For data packets for interaction between the OLT and the ONU, it can be determined which of them can be transmitted on the second downlink channel. For example, relatively important data or data with a great length is considered to be transmitted on the first downlink channel. This is because a bandwidth of the preset pilot tone signal may be relatively limited, and may be unable to meet transmission requirements of management control packets in all scenarios. However, in a specific application scenario, it may be further determined, according to a signal bandwidth and a transmission requirement, whether transmission is to be performed on the second downlink channel.

In the example shown in FIG. 5, S200 includes but is not limited to steps S210 to S230.

At S210, when a first preset waiting time is reached, the first network device frames the downlink data packet according to the first state information in the uplink announcement packet to obtain a downlink frame carrying the downlink data packet.

At S220, the first network device modulates the downlink frame into the second downlink signal.

At S230, the first network device transmits the modulated second downlink signal to the second network device through the second downlink channel.

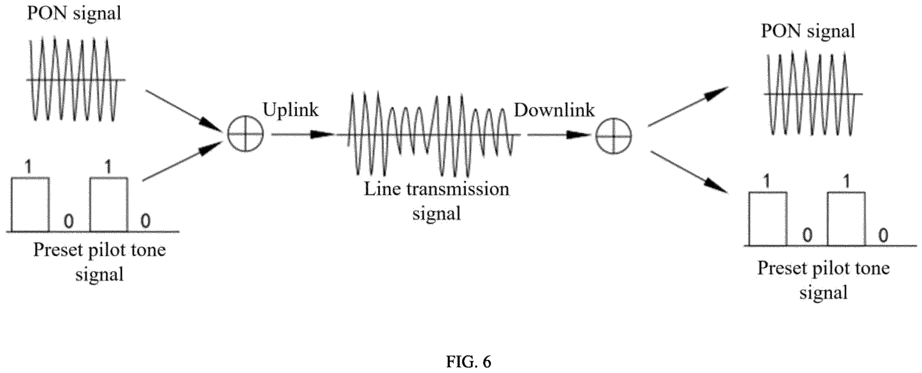

In an embodiment, the first network device frames the downlink data packet according to the first state information in the uplink announcement packet to fill the downlink data packet into the downlink frame, modulates the downlink frame into the second downlink signal to encapsulate the downlink data packet in the second downlink signal, and then sends the second downlink signal to the second downlink channel for transmission, thereby implementing transmission of the downlink data packet. It can be learned that by framing the downlink data packet for transmission, stability of transmission of the downlink data packet can be improved, and at the same time, it is convenient to modulate the downlink data packet to the second downlink signal to realize transmission on the second downlink channel matching the second downlink signal. Accordingly, when receiving the downlink data packet, the ONU can demodulate the modulated second downlink signal through a modulation and demodulation module to obtain the downlink data packet and the required first downlink signal. As shown in FIG. 6, for the downlink channel, a PON signal and the preset low-frequency pilot tone signal are superimposed to form a new line transmission signal. When receiving the line transmission signal, the ONU demodulates the line transmission signal to recover it to the PON signal and the preset low-frequency pilot tone signal, and also obtains the downlink data packet from the line transmission signal through analysis.

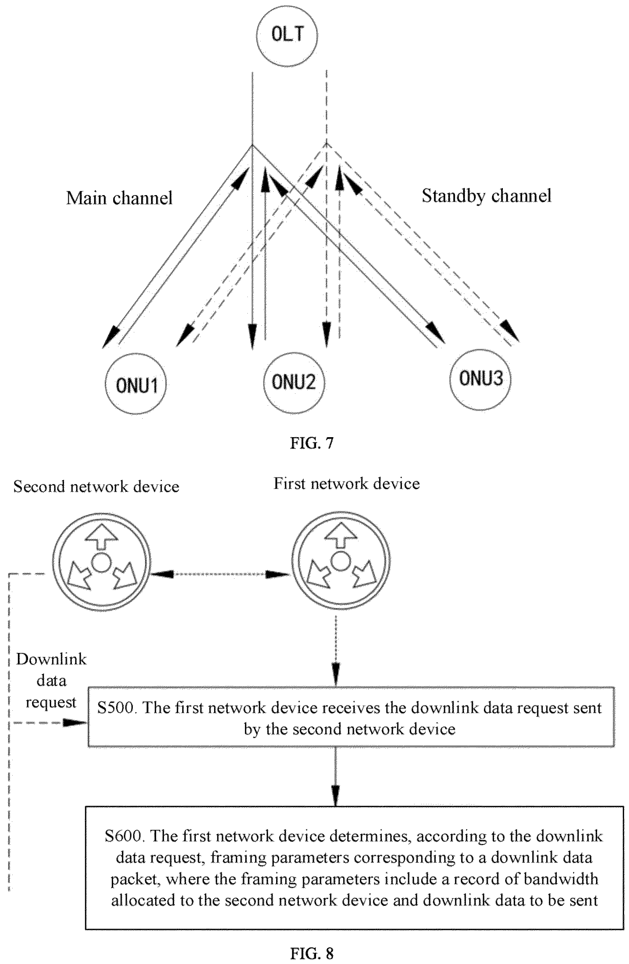

It should be noted that both data of the second downlink channel and data of the first downlink channel can be point-to-multipoint transmission. Refer to FIG. 7, which presents a mechanism in which a single OLT corresponds to a plurality of ONUs at the same time, and a downlink data packet is broadcast in downlink. Certainly, this is only a possible data transmission mode described in this embodiment of the present disclosure, and other similar point-to-multipoint transmission modes are also applicable to this embodiment of the present disclosure. In addition, the transmission technology in which the OLT dynamically allocates user transmission data provided by the above embodiment may not be used. Instead, an Ethernet communication technology similar to collision detection and not based on OLT dynamic bandwidth authorization may be used, with similar technical effects being achieved, but with different communication efficiency.

In the example shown in FIG. 8, before S210, the method further includes but is not limited to S500 and S600.

At S500, the first network device receives a downlink data request sent by the second network device.

At S600, the first network device determines, according to the downlink data request, framing parameters corresponding to the downlink data packet, where the framing parameters include a record of bandwidth allocated to the second network device and downlink data to be sent.

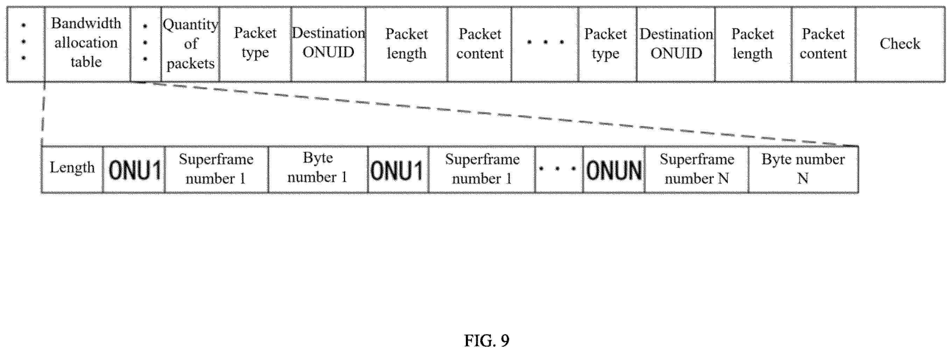

In an embodiment, framing is performed for the downlink data packet. As shown in FIG. 9, the downlink frame carries a bandwidth allocation table, a quantity of packets, a plurality of packets to be sent to the ONU, and a check code. Each packet includes a destination ONUID (that is, ONU number), a packet type, a packet length, packet content, etc. The bandwidth allocation table includes a series of configurations. In an example, A bandwidth allocation table of a downlink frame may include bandwidth allocations of all ONUs, or may include bandwidth allocations of only a part of ONUs, but in such case, all ONUs need to be granted authorization for a period of time. For example, a configuration item of the bandwidth allocation table in FIG. 9 includes ONUID, a corresponding authorized superframe number and a quantity of transmitted bytes. It should be noted that the "superframe" in the superframe number described herein has the same meaning as "superframe" generally defined in the downlink frame of the PON.

In an embodiment, when the OLT receives a downlink data request sent by the ONU before the first preset waiting time is reached, the OLT may determine, according to the downlink data request, framing parameters corresponding to the downlink data packet, where the framing parameters may be a record of bandwidth specifically allocated by the ONU and downlink data to be sent. Considering that the OLT may relate to point-to-multipoint transmission, corresponding bandwidth distribution, and corresponding bandwidth data can be provided for one or more ONUs by setting the record of bandwidth allocated and the downlink data to be sent. In addition, the downlink data packet being framed after the framing parameters are determined can contribute to more accurate framing content and a better framing effect.

Examples of application of the embodiments of the present disclosure in related scenarios are given below.

### Example I:

For the ODN, if there is a bit error in a downlink channel between the OLT and the ONU, since sensitivity of the standby channel (that is, the second downlink channel) is higher than that of the main channel (that is, the first downlink channel), the OLT can make emergency control on an optical module on the ONU through the standby channel, such as adjusting parameters of the optical module to a more applicable range, which may be temporarily increasing a transmit optical power of a signal, increasing receiving sensitivity of the optical module, etc. After the ODN is repaired, relevant parameters of the optical module are adjusted to a normal range.

### Example II:

In a case that a bit error occurs in the downlink, the main channel can no longer transmit a relevant data packet. In this case, diagnostic information of all ONUs on the PON can be obtained through the standby channel, such as transmit optical powers and receive optical powers of the ONUs. By comparing a calculated ODN link loss between the OLT and the ONU and a link loss under a normal circumstance, it can be determined whether the problem relates to all the ONUs or an individual ONU. The following cases are included:
In Case one, if a transmit optical power of an optical module of an individual ONU weakens, it may be related to the aging of the optical module, and in this case, the transmission optical module needs to be replaced;
in Case two, if a transmit optical power of an optical module does not change but a receive optical power of an opposite end weakens, it may be that attenuation of the ODN link increases, and in this case, an optical path needs to be adjusted;
in Case three, if a transmit optical power and a receive optical power of an optical module do not change, it may be that sensitivity of an optical module at an OLT receive end becomes worse, and in this case, the optical module at the OLT receive end needs to be replaced; and
in Case four, for the scenario of Case two, it may be further determined whether receive optical powers of all ONUs have changed. If yes, a feeder fiber undergoes excessive attenuation. Conversely, if only a receive optical power of an individual ONU has changed, it means that the problem lies in a distribution fiber.

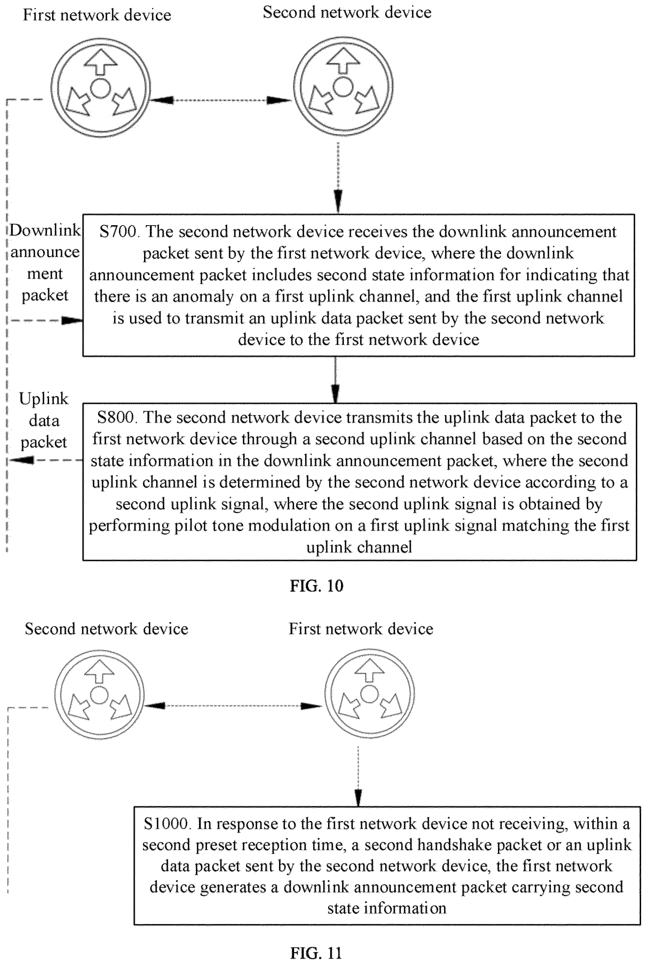

Now refer to FIG. 10. FIG. 10 is a flowchart of an information processing method according to another embodiment of the present disclosure. The method may be applied to, without being limited to, a network system as shown in the embodiment of FIG. 1, and the information processing method includes but is not limited to steps S700 to S900.

At S700, the second network device receives a downlink announcement packet sent by the first network device, where the downlink announcement packet includes second state information for indicating that there is an anomaly on a first uplink channel, and the first uplink channel is used to transmit an uplink data packet sent by the second network device to the first network device.

In an embodiment, for data packet interaction on an uplink side, when the second network device receives the downlink announcement packet sent by the first network device, the second network device can accurately learn, through the second state information in the downlink announcement packet, that there is an anomaly on a current network link. Compared with an existing technology, there is no need to obtain relevant OAM information through a management channel to determine a condition of the network link, which reflects more intuitively a state of the network link. It should be noted that, as a general concept, the uplink data packet may be one or more specific data packets, which can be set adaptively in different application scenarios, and is not limited in this embodiment.

In an embodiment, there are various ways to determine that there is an anomaly on the first uplink channel, for example, a detected receive optical power of the OLT is lower than sensitivity of an optical module, or it is detected that a large number of bit errors have occurred in the OLT, or it is detected that data received by the OLT suffers packet loss. Those having ordinary skill in the art may also determine whether there is an anomaly in a reception state of the first uplink channel according to an actual application scenario, which is not limited in this embodiment.

In the example shown in FIG. 11, before S700, the method further includes but is not limited to S1000, where step S 1000 is a specific step embodiment when it is indicated that there is an anomaly on the first uplink channel.

At S 1000, in response to the first network device not receiving, within a second preset reception time, a second handshake packet or the uplink data packet sent by the second network device, the first network device generates the downlink announcement packet carrying the second state information.

In an embodiment, when the OLT does not receive the second handshake packet or the uplink data packet sent by the ONU, it can be determined that the reception state of the first uplink channel from the ONU to the OLT is abnormal. Therefore, in order to announce the second state information to the ONU, the OLT generates the downlink announcement packet carrying the second state information to further announce the second state information to the ONU, so that the ONU can learn a real-time link state of the first uplink channel in time, to handle a failure corresponding to the first uplink channel.

It should be noted that the OLT can generate and send the downlink announcement packet to the ONU at any time, and the scenario in S 1000 in which the OLT does not receive the second handshake packet sent by the ONU also satisfies the above-mentioned case, except that in the scenario in S 1000, when the OLT generates and sends the downlink announcement packet, the OLT carries the second state information in the downlink announcement packet to inform the ONU that there is an anomaly on the current link.

In an embodiment, by setting the second preset reception time, interaction moments of the ONU and the OLT can be limited to a preset range, so that it can be more accurately determined whether the OLT can receive the first handshake packet. It can be understood that, the second preset reception time may be set accordingly by those having ordinary skill in the art according to an actual application scenario, which is not limited in this embodiment.

At S800, the second network device transmits the uplink data packet to the first network device through a second uplink channel based on the second state information in the downlink announcement packet, where the second uplink channel is determined by the second network device according to a second uplink signal, where the second uplink signal is obtained by performing pilot tone modulation on a first uplink signal matching the first uplink channel.

In an embodiment, when the second network device receives the downlink announcement packet sent by the first network device, the second network device can accurately learn, through the second state information in the downlink announcement packet, that there is an anomaly on a current network link. The second uplink channel is determined by the second network device according to a second uplink signal, where the second uplink signal is obtained by performing pilot tone modulation on a first uplink signal matching the first uplink channel. Therefore, based on the second state information, the uplink data packet can be switched from the first uplink channel to the second uplink channel matching the second uplink signal for transmission. Compared with an existing technology, the present disclosure can realize network channel transmission management in a case that there is an anomaly on a network channel, thereby improving stability of data packet interaction.

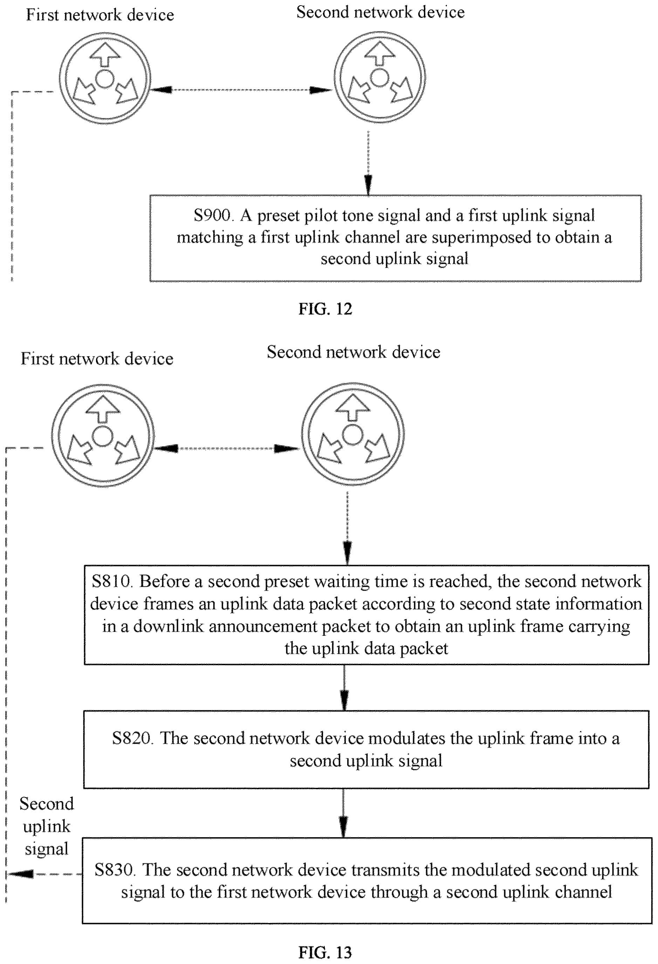

In an embodiment, in the example shown in FIG. 12, the second uplink signal is obtained by processing the first uplink signal as shown in step S900:
At S900, a preset pilot tone signal and the first uplink signal matching the first uplink channel are superimposed to obtain the second uplink signal.

In an embodiment, a low-frequency dither signal (that is, a preset pilot tone signal) can be superimposed on a wavelength main signal transmitted in a PON, so that a corresponding data packet can be encapsulated into a channel matching the superimposed signal for transmission. It can be proved from experimental research that sensitivity performance of a standby main signal (that is, the second uplink signal) obtained after superimposing the preset pilot tone signal on the wavelength main signal (that is, the first uplink signal) of a service in uplink of the PON is better than that of the original wavelength main signal of the service, with an improvement of usually more than 10 dB. Based on this performance optimization method, the second uplink channel provided based on the second uplink signal can be used to transmit data packets when a received signal in the PON network exceeds a sensitivity range or packet loss or interruption occurs.

It should be noted that the second uplink channel, as a standby channel matching the preset pilot tone signal, can be used after a switch only when the second state information is determined. For data packets for interaction between the OLT and the ONU, it can be determined which of them can be transmitted on the second uplink channel. For example, relatively important data or data with a great length is considered to be transmitted on the first uplink channel. This is because a bandwidth of the preset pilot tone signal may be relatively limited, and may unable to meet transmission requirements of management control packets in all scenarios. However, in a specific application scenario, it may be further determined, according to a signal bandwidth and a transmission requirement, whether transmission is to be performed on the second uplink channel.

In the example shown in FIG. 13, S800 includes but is not limited to steps S810 to S830.

At S810, before a second preset waiting time is reached, the second network device frames the uplink data packet according to the second state information in the downlink announcement packet to obtain an uplink frame carrying the uplink data packet.

At S820, the second network device modulates the uplink frame into the second uplink signal.

At S830, the second network device transmits the modulated second uplink signal to the first network device through the second uplink channel.

In an embodiment, the second network device frames the uplink data packet according to the second state information in the downlink announcement packet to fill the uplink data packet into the uplink frame, modulates the uplink frame into the second uplink signal to encapsulate the uplink data packet in the second uplink signal, and then sends the second uplink signal to the second uplink channel for transmission, thereby implementing transmission of the uplink data packet. It can be learned that by framing the uplink data packet for transmission, stability of transmission of the uplink data packet can be improved, and at the same time, it is convenient to modulate the uplink data packet to the second uplink signal to realize transmission on the second uplink channel matching the second uplink signal. Accordingly, when receiving the uplink data packet, the OLT can demodulate the modulated second uplink signal through a modulation and demodulation module to obtain the uplink data packet and the required first uplink signal; or process, in the above manner, a relevant data packet to be transmitted and encapsulate a processed data packet into the second uplink signal for sending. As shown in FIG. 6, for the uplink channel, a PON signal and the preset low-frequency pilot tone signal are superimposed to form a new line transmission signal. When receiving the line transmission signal, the OLT demodulates the line transmission signal to recover it to the PON signal and the preset low-frequency pilot tone signal, and also obtains the uplink data packet from the line transmission signal through analysis.

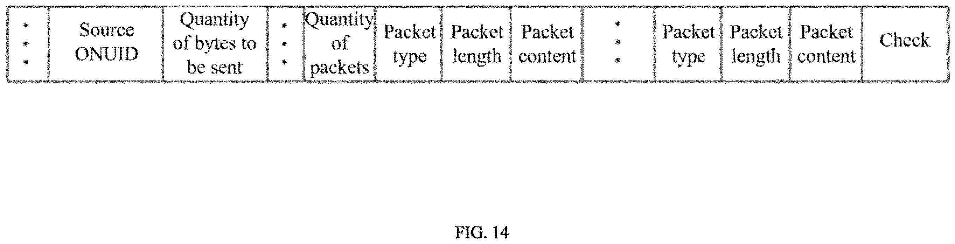

In an embodiment, as shown in FIG. 14, the uplink frame carries a source ONUID, a quantity of bytes to be sent, a quantity of packets, a plurality of packets to be sent to the OLT, and a check code. Each packet is composed of a packet type, a packet length, packet content, and the like.

It should be noted that both data of the second uplink channel and data of the first uplink channel can be point-to-multipoint transmission. Refer to FIG. 7, which presents a mechanism in which a single OLT corresponds to a plurality of ONUs at the same time, and in uplink, a database administrator is responsible for uplink data transmission management. Certainly, this is only a possible data transmission mode described in this embodiment of the present disclosure, and other similar point-to-multipoint transmission modes are also applicable to this embodiment of the present disclosure. In addition, the transmission technology in which the OLT dynamically allocates user transmission data provided by the above embodiment may not be used. Instead, an Ethernet communication technology similar to collision detection and not based on OLT dynamic bandwidth authorization may be used, with similar technical effects being achieved, but with different communication efficiency.

It is worth noting that the information processing method in this embodiment and the information processing methods in the above-described embodiments belong to the same invention concept, and an execution body is the network system shown in the embodiment of FIG. 1. Therefore, for specific implementations of the information processing method in this embodiment, refer to the specific embodiments of the information processing methods in the above-described embodiments. In order to avoid redundancy, the specific implementations of the information processing method in this embodiment will not be described here in detail.

In order to more clearly explain principles of the above-described embodiments, specific examples are given below to explain a management mechanism of data packet transmission between the OLT and the ONU through the corresponding uplink or downlink channels.

### Example III:

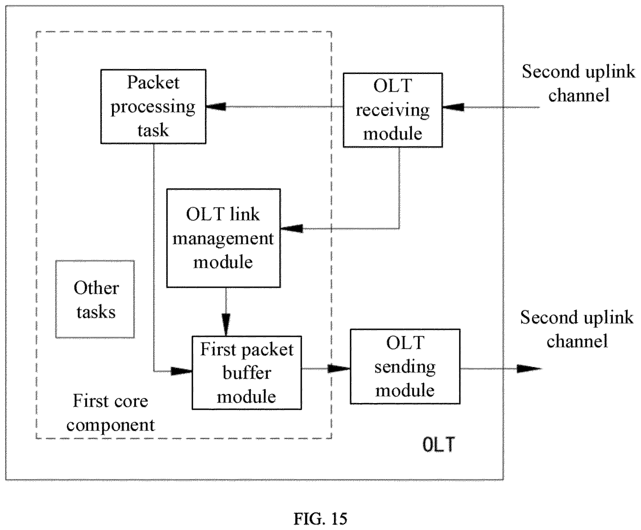

As shown in FIG. 15, an OLT is provided with a first emergency link processing assembly and a corresponding first core component inside, and a structure of the OLT and corresponding functions include:
an OLT receiving module responsible for receiving an uplink frame for further processing and distribution;
an OLT sending module responsible for encapsulation and sending of a downlink frame;
an OLT link management module responsible for sending a first handshake packet and a downlink announcement packet and receiving a relevant packet; and
a first packet buffer module for temporarily buffering a packet to be sent so that the OLT sending module can periodically send the packet.

Based on the above first emergency link processing assembly and the corresponding core component in this embodiment, specific embodiments of a sending process and a receiving process related to the OLT are respectively provided.

The OLT receiving process is processed by the OLT receiving module:
At step 1, the OLT recovers an uplink frame from a second uplink signal which functions as an uplink main signal.

At step 2, the OLT takes out a source ONUID and a quantity of bytes to be sent from the uplink frame, and sends the source ONUID and the quantity of bytes to be sent as a bandwidth allocation application of the ONU to a dynamic bandwidth allocation module, where comprehensive calculation are performed on the bandwidth allocation application and a bandwidth allocation application of another ONU, and a calculation result is finally added to a bandwidth allocation table of a downlink frame involved in the OLT sending process.

At step 3, the OLT extracts packets from the ONU one by one from the uplink frame according to a total quantity of packets, and transmits them to a first packet buffer module for receiving and buffering. In addition, if the packet is a downlink announcement packet, the packet needs to be sent to the corresponding OLT link management module for processing.

The OLT sending process is processed by the OLT sending module.

At step 1, according to a downlink data request from the ONU, the OLT calculates and records bandwidth to be allocated to each ONU and downlink data to be sent (sending is not performed if there is no downlink data that needs to be sent). Each record mainly embodies three fields: ONU K, a superframe number K, and a quantity K of bytes, where the superframe number is a start superframe number of bandwidth allocation, the quantity of bytes is a bandwidth allocation length, and K is a record number.

At step 2, when a sending time is reached, the OLT frames a downlink data packet, and fills the record of bandwidth allocated to each ONU into a bandwidth allocation table in a frame structure, where a length of the bandwidth allocation table is reflected in a quantity of ONU records in the bandwidth allocation table, and a packet quantity field in the frame structure is initialized to 0.

At step 3, if there is downlink data to be sent, all packets to be sent are filled into the frame structure shown in FIG. 9. A packet type, a packet length and a destination ONUID are filled for each packet to be sent. The packet quantity field in the frame structure is updated according to a quantity of packets to be sent.

At step 4, the OLT modulates the assembled downlink frame added with a calculated check field into a second downlink signal through a preset pilot tone signal, then sends the second downlink signal to a second downlink channel, and finally transmits the second downlink signal to the ONU.

### Example IV

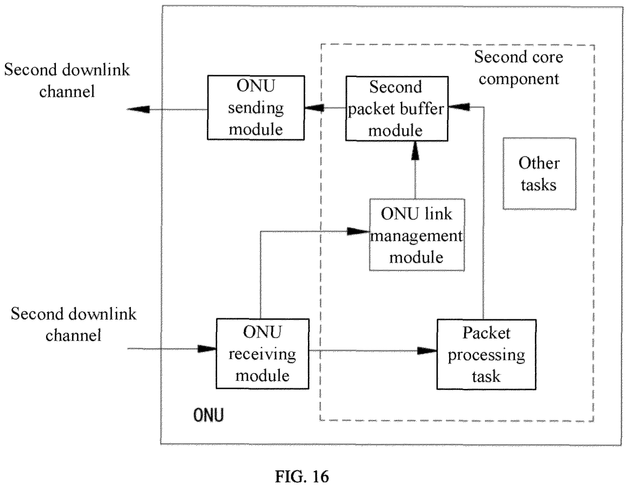

As shown in FIG. 16, an ONU is provided with a second emergency link processing assembly and a corresponding second core component inside, and a structure of the ONU and corresponding functions include:
an ONU receiving module responsible for receiving a downlink frame for further processing and distribution;
an ONU sending module responsible for encapsulation and sending of an uplink frame;
an ONU link management module responsible for sending a second handshake packet and an uplink announcement packet and receiving a relevant packet; and
a second packet buffer module for temporarily buffering a packet to be sent so that the ONU sending module can periodically send the packet.

Based on the above second emergency link processing assembly and the corresponding core component in this embodiment, specific embodiments of a sending process and a receiving process related to the ONU are respectively provided.

The ONU receiving process is processed by the ONU receiving module:
At step 1, the ONU recovers a downlink frame from a second downlink signal which functions as a downlink main signal.

At step 2, the ONU retrieves bandwidth allocation information (including a superframe number and a quantity of bytes) related to the ONU from a bandwidth allocation table of the downlink frame, as the basis for the next transmission of a packet.

At step 3, the ONU extracts packets related to the ONU one by one from the downlink frame, and transmits them to a second packet buffer module. In particular, if a destination ONUID of a downlink packet is a special value (for example, 65535), which means broadcasting to all ONUs, the packet must be extracted. In addition, if the packet is an uplink announcement packet, the packet needs to be sent to the corresponding ONU link management module for processing.

The ONU sending process is processed by the ONU sending module.

At step 1, the ONU frames an uplink data packet before a time point allocated by an OLT is reached. A format of a frame structure is shown in FIG. 14. It is necessary to fill the packets to be sent in the second packet buffer module into the uplink frame structure one by one, and fill in corresponding lengths and types of the packets to be sent.

At step 2, if a sum of a total length of a current uplink frame and a length of the first packet to be sent in the second packet buffer module is less than a sending length (that is, a "byte quantity" field in the bandwidth allocation table in the downlink frame structure) allocated by the OLT to the ONU, the first packet in the second packet buffer module can continue to be filled into the uplink frame structure. On the contrary, or if the buffer is unavailable, the filling is ended, and the ONU updates a total packet quantity field in the uplink frame to a quantity of encapsulated packets to be sent.

At step 3, if there is still a packet to be sent in the second packet buffer module, the "bytes to be sent" field in the uplink frame is updated to a total quantity of bytes of the packets to be sent, otherwise, the field is cleared. Then, calculated check field code is added to the uplink frame.

At step 4, after a time corresponding to a sending superframe number allocated by the OLT to the ONU is reached, the ONU modulates the uplink frame into a second uplink signal on time, then sends the second uplink signal to a second uplink channel, and finally transmits the second uplink signal to the OLT.

It can be understood that, according to Examples III and IV, corresponding link management modules reside on both the OLT and the ONU, and the OLT link management modules can periodically determine whether a network link is available with all the ONU link management modules. For a specific determination basis, refer to in the following example.

### Example V:

In a case, it is determined whether an uplink data packet sent by an ONU is received within a time window granted by an OLT to the ONU. If the OLT receives the uplink data packet, a network link is considered normal; if the uplink data packet fails to be received within a period of time (assuming preset N1 seconds), the network link is considered abnormal.

In another case, when it is determined that the link is normal, the OLT performs channel state determination with the ONU periodically (for example, every N2 seconds) through an interactive handshake-type message. If an opposite side can normally receive the interactive message, a reception state of a corresponding channel is considered normal; if the interactive handshake-type message fails to be received within a period of time (which may be preset N1 seconds, where N1 is at least a multiple of N2), the reception state of the corresponding channel is considered abnormal.

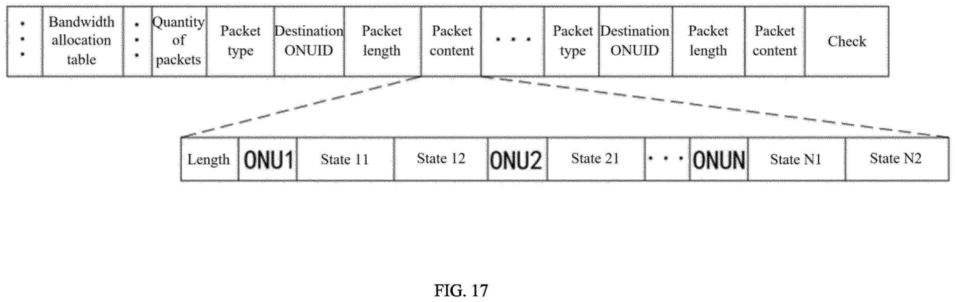

In another case, the OLT and the ONU periodically announce channel states to inform an opposite side that reception states of a current main channel and a standby channel are normal or abnormal. The opposite side determines whether the channel can still be used to send a data packet according to the obtained reception states of the channels. A channel state announcement may be transmitted on both the main channel and the standby channel. A downlink channel state announcement message may be encapsulated in a downlink frame. A structure of the corresponding downlink frame is shown in FIG. 17. Packet content in the downlink frame includes a length, ONU and two state values. Here, two state values corresponding to each ONU respectively represent states of a main downlink channel and a standby downlink channel corresponding to the ONU. Similarly, two state values corresponding to an uplink channel announcement message respectively represent states of a main uplink channel and a standby uplink channel corresponding to the ONU.

An example of an application of the embodiment of the present disclosure in another scenario is given below.

### Example VI:

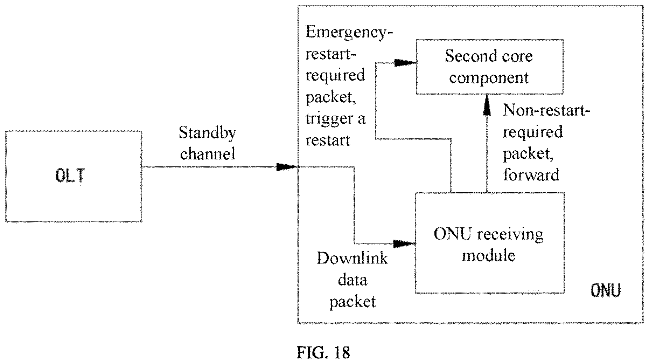

If software or hardware on an ONU is faulty and causes an ONU software hang or a main channel failing in communication, although it is possible to switch a communication part to a standby channel, if it is determined that the fault is caused by a software hang or caused by a failure of hardware logic of a core part of a system, the fault may not be repaired after a switch to the standby channel is made. In this scenario, some design applications may be added to solve the above problem. As shown in FIG. 18, received data of the standby channel is processed by an independent hardware module, and a special type is defined in a downlink data packet: an emergency restart type. A packet of the specific type is processed by an independent hardware module. When receiving a packet of the special type, the hardware module directly resets the core part of the system of the ONU through a hardware signal to realize logic restart. In this way, common faults caused by dynamic logic of the software or hardware can be solved.

In addition, an embodiment of the present disclosure also provides a network system including a first network device and a second network device, where the first network device and the second network device may be applied cooperatively as a network system in the embodiment shown in FIG. 1. The network system in this embodiment can constitute, for example, a part of the network system in the embodiment shown in FIG. 1, and these embodiments are of the same inventive concept. Therefore, these embodiments have the same implementation principles and technical effects, and details will not be repeated herein.

The first network device and the second network device can cooperate to perform the information processing method in any embodiment applied to the network system, for example, the first network device and the second network device cooperate to perform the above-described method steps S100 and S200 in FIG. 2, S400 in FIG. 3, S300 in FIG. 4, S210 to S230 in FIG. 5, S500 and S600 in FIG. 8, S700 and S800 in FIG. 10, S1000 in FIG. 11, S900 in FIG. 12, or S810 to S830 in FIG. 13.

The device embodiments or system embodiments described above are only for illustration. The units described as separate components may or may not be physically separated, that is, they may be located at one place or distributed to multiple network units. Some or all of the modules can be selected according to actual needs to achieve the purpose of the scheme of this embodiment.

Furthermore, an embodiment of the present disclosure also provides a computer-readable storage medium which stores computer-executable instructions which, when executed by a processor or controller, for example, the processor of any of the device embodiments above, can cause the processor to perform the information processing method in any of the above embodiments, for example, to perform the above-described method steps S100 and S200 in FIG. 2, S400 in FIG. 3, S300 in FIG. 4, S210 to S230 in FIG. 5, S500 and S600 in FIG. 8, S700 and S800 in FIG. 10, S1000 in FIG. 11, S900 in FIG. 12, or S810 to S830 in FIG. 13.

Embodiments of the present disclosure include: an information processing method applied to a network system including a first network device and a second network device, the method including: receiving, by the first network device, an uplink announcement packet sent by the second network device, where the uplink announcement packet includes first state information for indicating that there is an anomaly on a first downlink channel, and the first downlink channel is used to transmit a downlink data packet sent by the first network device to the second network device; and transmitting, by the first network device, the downlink data packet to the second network device through a second downlink channel according to the first state information in the uplink announcement packet, where the second downlink channel is determined by the first network device according to a second downlink signal, and the second downlink signal is obtained by performing pilot tone modulation on a first downlink signal matching the first downlink channel. According to the scheme provided by the embodiment of the present disclosure, when the first network device receives the uplink announcement packet sent by the second network device, the first network device can accurately learn, through the first state information in the uplink announcement packet, that there is an anomaly on a current network link. The second downlink channel is determined by the first network device according to the second downlink signal, and the second downlink signal is obtained by performing pilot tone modulation on the first downlink signal matching the first downlink channel. Therefore, based on the first state information, the downlink data packet can be switched from the first downlink channel to the second downlink channel matching the second downlink signal for transmission. Compared with an existing technology, the present disclosure can realize network channel transmission management in a case that there is an anomaly on a network channel, thereby improving stability of data packet interaction.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or another memory technology, a compact disc read-only memory (CD-ROM), a digital versatile disk (DVD) or another optical disk storage, a magnetic cassette, a magnetic tape, magnetic disk storage or another magnetic storage apparatus, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

The above is a detailed description of some implementations of the present disclosure, but the present disclosure is not limited to the above-mentioned implementations. Those of ordinary skill in the art can also make various equivalent modifications or replacements without departing from the principle of the present disclosure, and these equivalent modifications or replacements are all included in the scope defined by the claims of the present disclosure.

## Claims

1. An information processing method, applied to a network system, the network system comprising a first network device and a second network device, the method comprising:
receiving, by the first network device, an uplink announcement packet sent by the second network device, wherein the uplink announcement packet comprises first state information for indicating a presence of anomaly on a first downlink channel, and the first downlink channel is used to transmit a downlink data packet sent by the first network device to the second network device;
transmitting, by the first network device, the downlink data packet to the second network device through a second downlink channel according to the first state information in the uplink announcement packet, wherein the second downlink channel is determined by the first network device according to a second downlink signal, wherein the second downlink signal is obtained by performing pilot tone modulation on a first downlink signal matching the first downlink channel.

2. The information processing method of claim 1, wherein the second downlink signal is obtained by processing the first downlink signal as follows:
superimposing a preset pilot tone signal and the first downlink signal matching the first downlink channel to obtain the second downlink signal.

3. The information processing method of claim 1 or 2, wherein the transmitting, by the first network device, the downlink data packet to the second network device through a second downlink channel according to the first state information in the uplink announcement packet comprises:
when a first preset waiting time is reached, framing, by the first network device, the downlink data packet according to the first state information in the uplink announcement packet to obtain a downlink frame carrying the downlink data packet;
modulating, by the first network device, the downlink frame into the second downlink signal; and
transmitting, by the first network device, the modulated second downlink signal to the second network device through the second downlink channel.

4. The information processing method of claim 3, before the framing, by the first network device, the downlink data packet according to the first state information in the uplink announcement packet to obtain a downlink frame carrying the downlink data packet, further comprising:
receiving, by the first network device, a downlink data request sent by the second network device; and
determining, by the first network device according to the downlink data request, framing parameters corresponding to the downlink data packet, wherein the framing parameters comprise a record of bandwidth allocated to the second network device and downlink data to be sent.

5. The information processing method of claim 1, wherein the anomaly comprises: the second network device does not receive, within the first preset reception time, a first handshake packet or the downlink data packet sent by the first network device.

6. An information processing method, applied to a network system, the network system comprising a first network device and a second network device, the method comprising:
receiving, by the second network device, a downlink announcement packet sent by the first network device, wherein the downlink announcement packet comprises second state information for indicating a presence of an anomaly on a first uplink channel, and the first uplink channel is used to transmit an uplink data packet sent by the second network device to the first network device; and
transmitting, by the second network device, the uplink data packet to the first network device through a second uplink channel based on the second state information in the downlink announcement packet, wherein the second uplink channel is determined by the second network device according to a second uplink signal, wherein the second uplink signal is obtained by performing pilot tone modulation on a first uplink signal matching the first uplink channel.

7. The information processing method of claim 6, wherein the second uplink signal is obtained by processing the first uplink signal as follows:
superimposing a preset pilot tone signal and the first uplink signal matching the first uplink channel to obtain the second uplink signal.

8. The information processing method of claim 6 or 7, wherein transmitting, by the second network device, the uplink data packet to the first network device through a second uplink channel based on the second state information in the downlink announcement packet comprises:
before a second preset waiting time is reached, framing, by the second network device, the uplink data packet according to the second state information in the downlink announcement packet to obtain an uplink frame carrying the uplink data packet;
modulating, by the second network device, the uplink frame into the second uplink signal; and
transmitting, by the second network device, the modulated second uplink signal to the first network device through the second uplink channel.

9. The information processing method of claim 6, wherein the anomaly comprises: the first network device does not receive, within the second preset reception time, a second handshake packet or the uplink data packet sent by the second network device.

10. A network system, comprising a first network device and a second network device, wherein the first network device and the second network device cooperate with each other to perform the information processing method of any one of claims 1 to 9.

11. A computer-readable storage medium, storing computer-executable instructions configured to cause a computer to perform the information processing method of any one of claims 1 to 9.
